# EUROPÄISCHE PATENTSCHRIFT

(11) **EP 0 861 160 B1**
(45) Veröffentlichungstag und Bekanntmachung des Hinweises auf die Patenterteilung: **05.04.2000**
(21) Anmeldenummer: 96939051.7
(22) Anmeldetag: 15.11.1996
(51) Int. Cl.: B60C 23/04

(54) **VERFAHREN ZUR ZUORDNUNG VON SENDERN ZU EMPFANGSANTENNEN BEI REIFENDRUCKÜBERWACHUNGSSYSTEMEN**
METHOD OF ALLOCATING TRANSMITTERS TO RECEIVING ANTENNAS IN TYRE-PRESSURE MONITORING SYSTEMS
PROCEDE D'ATTRIBUTION D'EMETTEURS A DES ANTENNES DE RECEPTIONS DANS DES SYSTEMES DE SURVEILLANCE DE LA PRESSION DES PNEUS

(30) Priorität: 17.11.1995 DE 19542833; 05.03.1996 DE 19608478
(43) Veröffentlichungstag der Anmeldung: 02.09.1998
(73) Patentinhaber: Beru AG, 71636 Ludwigsburg (DE)
(72) Erfinder: NORMANN, Norbert, D-75223 Niefern-Öschelbronn (DE); KESSLER, Ralf, D-76237 Söllingen (DE); SCHULZE, Gunter, D-75228 Ispringen (DE)
(74) Vertreter: Twelmeier, Ulrich, Dipl. Phys.
(86) Internationale Anmeldenummer: EP9605021
(87) Internationale Veröffentlichungsnummer: WO9718962

(56) Entgegenhaltungen:
- EP-A- 0 763 437
- WO-A-93/08036
- WO-A-93/16891
- WO-A-94/20317
- WO-A-96/15919

## Beschreibung

Die Erfindung geht aus von einem Verfahren zur Zuordnung von Sendern zu Empfangsantennen bei Reifendrucküberwachungssystemen mit den im Oberbegriff des Anspruchs 1 bzw. 2 angegebenen Merkmalen. Ein solches Verfahren ist aus der WO 93/16891 bekannt. Dort wird eine Kombination aus Druckmeßfühler, Sender und Sendeantenne am Rad mit jeweils zugeordneten Empfangsantennen und einer zentralen Auswerteelektronik an der Karosserie verwendet. Das Problem, das sich bei solchen Reifendrucküberwachungssystemen stellt, ist die eindeutige Zuordnung der Sender zu der jeweiligen Radposition. In der WO 93/16891 wird dieses Problem der Positionserkennung wie folgt gelöst: Die Sender erzeugen ein in vier Abschnitte unterteiltes Signal, bestehend aus Präambel, Identifikationssignal, Meßsignal und Postambel. Anhand des Identifikationssignals kann die zentrale Auswerteelektronik die Position erkennen. Dafür muß jedoch zunächst eine Initialisierung durchgeführt werden, in deren Verlauf das jeweilige Identifikationssignal, verknüpft mit der jeweiligen Position, von der zentralen Auswerteelektronik abgespeichert wird. Um diese Initialisierung durchzuführen, muß das System von Hand in einen sogenannten Paarungsmodus geschaltet werden und dann der Reihe nach jeder einzelne Sender einmal aktiviert werden. Danach wird das System wieder in den Meßmodus gebracht, bis sich die Senderpositionen, z.B. bei einem Radwechsel, ändern. In einer ersten Variante sind jedem Rad eine eigene Antenne und eine eigene Empfangselektronik zugeordnet, die mit einem zentralen Auswertegerät Verbindung hat. Die einem Rad individuell zugeordnete Empfangselektronik emfängt Signale von allen Rädern, wobei das von einem Rad kommende Signal jenem Empfangsteil zugeordnet wird, in welchem es die höchste Signalintensität erzeugt. Diese Zuordnung kann und soll nur bei stehendem Fahrzeug durchgeführt werden. In einer zweiten Variante des bekannten Verfahrens wird ein zentrales Auswertegerät ebenfalls bei stillstehendem Fahrzeug von Hand in den Paarungsmodus geschaltet, eine bestimmte Radposition vorgewählt, in dem gewählten Rad ein künstlicher Druckabfall herbeigeführt, das daraufhin gesendete Reifendrucksignal auf seine Kennung untersucht und diese dem Rad zugeordnet. Bei beiden Varianten muß bei jedem Radwechsel eine entsprechend eingewiesene Person diese Initialisierung und das anschließende Zuordnungsverfahren durchführen. Radwechsel in jeder beliebigen Werkstatt oder zu Hause sind dadurch unter Umständen nicht möglich, bzw. nur auf Kosten der Sicherheit. Die einwandfreie Funktion des Systems kann auf Grund möglicher Bedienungsfehler nicht gewährleistet werden.
In der WO 93/08036 wird die Information der Druckmeßfühler und der daran angeschlossenen Sendeelektronik nicht mit Hilfe einer zentralen Auswerteelektronik an der Karosserie registriert, sondern mit Hilfe eines Fernbedienungselementes. Dieses Fernbedienungselement besitzt eine LCD-Anzeigeeinrichtung, die das Ablesen des Reifendruckes ermöglicht. Will man den Reifendruck ermitteln, so muß man an jedem einzelnen Rad die gewünschte Information mit Hilfe des Fernbedienungselementes abfragen. Dieses Verfahren bietet zwar den Vorteil einer eindeutigen Zuordnung der Meßwerte, ermöglicht jedoch keine Kontrolle des Reifendrucks während der Fahrt.

**Aufgabe** der vorliegenden Erfindung ist es daher, ein Verfahren zur Positionserkennung zu entwickeln, welches auch unerfahrenen Mechanikern und Automobilbesitzern keine besonderen Fähigkeiten abverlangt, wenn es darum geht, nach einem Radwechsel die Zuordnung der Räder zu bestimmten Signalkennungen zu schaffen. Ein Versagen aufgrund möglicher Bedienungsfehler soll ausgeschlossen werden können.

Erfindungsgemäß wird die Aufgabe durch die im Anspruch 1 aufgeführten Merkmale gelöst. Die zentrale Auswerteelektronik registriert die Intensitäten, mit der derselbe Sender auf jeder Empfangsantenne empfangen wird. Diese Werte werden dann verglichen. Dabei werden mehrere aufeinanderfolgend empfangene Signale berücksichtigt, um fehlerhafte Zuordnungen zu vermeiden. Aus den mehreren Signalen kann z.B. ein Mittelwert gebildet werden, oder man zählt einfach, wie häufig das Ereignis eintritt, daß eine bestimmte Antenne einen Sender, d.h. ein Signal mit einer bestimmten Kennung, am stärksten empfängt (Anspruch 3). Anschließend wird anhand des Mittelwerts bzw. anhand der größten Anzahl von Ereignissen die Empfangsantenne dem entsprechenden Sender zugeordnet. Da die einem Sender direkt benachbarte Empfangsantenne das Signal in der Regel mit größerer Intensität empfängt, als die anderen Empfangsantennen und zusätzlich noch mehrere Signale zur Auswertung hinzugezogen werden, ist mit diesem Verfahren eine sichere Zuordnung gewährleistet. Und da dieses Verfahren selbsttätig arbeitet, gibt es von vornherein keine Probleme durch Bedienungsfehler.

Eine auf dem gleichen Lösungsprinzip beruhende weitere Lösung der Aufgabe ist im unabhängigen Anspruch 2 angegeben. Dabei sind gegenüber der Lösung nach Anspruch 1 in der Auswertung die Rollen der Empfangsantennen und Sender vertauscht; demgemäß wird beobachtet, welche der verschiedenen Empfangsantennen einen bestimmten Sender, d.h. ein Signal mit bestimmter Kennung, am stärksten empfängt. Auch in diesem Fall werden mehrere aufeinanderfolgende Signale berücksichtigt und ein Mittelwert gebildet oder einfach gezählt, wie oft eine Antenne das Signal mit der ausgewählten Kennung am stärksten empfängt. (Anspruch 3).

Eine mögliche Vorgehensweise zum Abspeichern der so erhaltenen Daten in der Auswerteelektronik beschreibt Anspruch 4. Dabei wird eine Zuordnungsmatrix bestehend aus allen Senderkennungen und Empfangsantennen gebildet. Der Wert in einer Matrixzelle wird im Verlauf des Zuordnungsverfahrens dann erhöht, wenn für die betreffende Kombination aus Empfangsantenne und Senderkennung die größte Intensität gemessen wird. Der Wert einer Matrixzelle gibt zum Beispiel an, wie häufig eine bestimmte Antenne ein Signal mit einer bestimmten Kennung am stärksten empfängt .

Auf die so beschriebene Art und Weise läßt sich das empfangene Signal auch zur Zuordnung der Senderkennung zu allen Empfangsantennen gleichzeitig nutzen. Dazu nutzt man insbesondere die im Anspruch 2 angeführte Vorgehensweise. Dabei werden die Intensitäten der über die verschiedenen Empfangsantennen erhaltenen Signale einer Kennung verglichen und der Wert der Matrixzelle für die Kombination aus Senderkennung und Empfangsantenne mit der größten Intensität erhöht. Nach Empfang mehrerer Signale unterschiedlicher Kennung läßt sich aus der Matrix die Zuordnung für alle Empfangsantennen erstellen. Durch eine ungünstige Radstellung, und damit eine ungünstige Positionierung des Senders in Bezug zur direkt benachbarten Empfangsantenne, könnte das Signal eines Senders von der direkt benachbarten Empfangsantenne mit geringerer Intensität empfangen werden, als von einer anderen Empfangsantenne, In diesem Fall würde in der Matrix der Wert einer falschen Matrixzelle erhöht werden. Um dies zu verhindern, läßt sich mit Vorteil die in Anspruch 5 beschriebene Methode nutzen. Dabei wird außer dem Signal mit der größten Intensität auch das mit der zweitgrößten ermittelt. Liefert die Differenzbildung dieser beiden Werte einen Wert oberhalb eines bestimmten Grenzwertes, so wird der Wert der Matrixzelle, die der größten Intensität angehört, erhöht. Liegt der Wert der Differenz jedoch unterhalb dieses Grenzwertes, so wird der Meßwert verworfen. Dieser Vorgehensweise liegt der Gedanke zugrunde, daß bei ungünstiger Radstellung zwar die Möglichkeit besteht, daß eine andere als die direkt zugeordnete Antenne das Signal mit größter Intensität empfängt, daß die Differenz zur zweitgrößten Intensität in diesem Fall aber auf jeden Fall geringer ist, als bei günstiger Radstellung. Somit wird die Gefahr einer fehlerhaften Zuordnung noch zusätzlich reduzierbar, das Erreichen einer sicheren Zuordnung beschleunigt.

Um das Zuordnungsverfahren zu beschleunigen, lassen sich die in den Ansprüchen 6 und 7 beschriebenen Weiterbildungen des erfindungsgemäßen Verfahrens anwenden. Wird, wie im Anspruch 6 beschrieben, der Wert der Matrixzelle nicht um einen festen Wert erhöht, sondern um einen mit der Intensitätsdifferenz gewichteten Wert, so wird dies dazu führen, daß sich die Matrixzelle mit dem maximalen Wert rascher ermitteln läßt. Entsprechend kann man dann, wenn man lediglich die Ereignisse zählt, daß ein Signal mit bestimmter Kennung von einer bestimmten Antenne mit maximaler Intensität empfangen wurde, die Zählrate gewichten, indem man z.B. dann, wenn die Intensität eines Signals mit bestimmter Kennung an einer Antenne um 10 % höher war als an der Antenne, bei der dasselbe Signal mit der zweitstärksten Intensität auftrat, das Ereignis 1-fach zählt, bei wenigstens 20 % höherer Intensität das Ereignis 2-fach zählt, bei wenigstens 30 % höherer Intensität 3-fach zählt, usw..

Zusätzlich kann man, wie im Anspruch 7 beschrieben, die Empfangsantennen mit bereits zugeordneter Senderkennung aus dem weiteren Zuordnungsverfahren herausnehmen. Das heißt, daß nach Ermittlung der ersten Zuordnung nur noch die Intensitäten der verbliebenen Empfangsantennen verglichen werden müssen.

Insgesamt wird so eine sichere und schnelle Zuordnung erreicht, die aufgrund ihrer selbsttätigen Arbeitsweise mögliche Bedienungsfehler ausschließt. Durch die in Anspruch 8 beschriebene Weiterbildung der Erfindung läßt sich erreichen, daß auch die Vertauschungen der Sender durch mögliche Radwechsel registriert werden, ohne daß ein Eingriff von außen in das System nötig wird. Dabei wird in regelmäßigen Zeitabständen der Wert der Matrixzellen für Sender bei zugeordneten Empfangsantennen auf einen festen Wert Ds gesetzt, der Wert der Matrixzellen für Sender bei nicht zugeordneten Empfangsantennen dagegen auf Null. Der Wert Ds kann dann dazu dienen eine Zeit festzusetzen, nach der die Zuordnung erneut bestimmt wird. Dies könnte z.B. dadurch erreicht werden, daß von dem festen Wert Ds in definierten Zeitabständen heruntergezählt wird. Hat der Inhalt der betreffenden Matrixzellen dann den Wert Null erreicht, was bei den zuvor auf den Wert Ds gesetzten gleichzeitig geschieht, so wird die Zuordnung erneut ermittelt.

Signale, welche von Sendern stammen, die sich an Rädern befinden, welche sich drehen (laufende Räder), werden mit schwankenden Signalpegeln empfangen, weil sich die Lage des Senders relativ zur Empfangsantenne infolge der Raddrehung zyklisch ändert. Bei mitgeführten Reserverädern ist das anders. Werden Signale empfangen, die von einem Reserverad ausgesandt sind, dann weisen diese keine durch den Fahrbetrieb bedingten Schwankungen ihres Signalpegels auf. Das macht es möglich, ein zusätzliches Kriterium zu finden, mit welchem sich Signale, die von einem Reserverad kommen, unterscheiden lassen von Signalen, die von laufenden Rädern kommen. Weiterbildungen der Erfindung, die eine solche Unterscheidung ermöglichen, sind Gegenstand der Ansprüche 9 und 10. Zeigt ein Signal, welches von einer Antenne empfangen wird, die einem der laufenden Räder zugeordnet ist, im Fahrbetrieb keine von der Raddrehung verursachten Schwankungen des Signalpegels, dann kann man daraus folgern, daß es von einem mitgeführten Reserverad stammt, nicht aber von einem Laufrad, und zwar selbst dann nicht, wenn dieses Signal, dessen Pegel keine fahrbedingten Schwankungen aufweist, von der betrachteten, einem Laufrad zugeordneten, Empfangsantenne mit der größten Intensität empfangen wird. Ein solches Signal wird gemäß dem Anspruch 9 entweder einem Reserverad zugeordnet oder bleibt völlig unberücksichtigt (letzteres insbesondere dann, wenn mitgeführte Reserveräder nicht überwacht werden sollen). Diese Weiterbildung der Erfindung hat den Vorteil, daß die Gefahr von fehlerhaften Zuordnungen ein weiteres Mal verringert wird. Das gilt insbesondere im Hinblick auf jene Laufräder, welche dem Reserverad am nächsten liegen, denn bei diesen könnte die Empfangsantenne, welche zu einem Laufrad gehört, welches in der Nähe eines Reserverades angeordnet ist, die vom Reserverad ausgesandten Signale mit annähernd gleich hoher Intensität empfangen wie die vom Laufrad ausgesandten Signale. Die Weiterbildung der Erfindung stellt sicher, daß es auch in diesem ungünstigen Fall nicht zu fehlerhaften Zuordnungen kommt.

Ein weiterer Vorteil dieser Weiterbildung der Erfindung liegt darin, daß sogar darauf verzichtet werden kann, für das Reserverad eine eigene Antenne vorzusehen, weil der Empfang der vom Reserverad ausgesandten Signale und deren richtige Zuordnung auch durch eine Antenne sichergestellt werden kann, welche einem benachbarten Laufrad zugeordnet ist.

Im Falle des Verfahrens, welches im unabhängigen Anspruch 2 angegeben ist, kann die Unterscheidung zwischen einem Reserverad und einem Laufrad, wie im Anspruch 10 angegeben, entsprechend erfolgen. Auch bei dieser Verfahrensvariante kann beim Reserverad auf eine eigene Empfangsantenne verzichtet werden.

Das in den Ansprüchen 9 und 10 angegebene Verfahren ist nicht nur nützlich, wenn wie üblich ein einzelnes Reserverad mitgeführt wird, sondern auch dann, wenn mehrere Ersatzräder oder Austauschräder mitgeführt werden. Wenn man z.B. zusätzliche Räder mit Winterreifen im Kofferraum mitführt, dann können die von diesen ausgesandten Signalen die korrekte Zuordnung der Laufräder zu ihren Empfangsantennen nicht stören.

Eine andere Möglichkeit, Signale, die von sich drehenden Rädern kommen, zu unterscheiden von Signalen, welche von Ersatzrädern kommen, ist in den Ansprüchen 11 und 12 angegeben. Diese Verfahrensweisen können anstelle oder in Kombination mit den Verfahrensweisen in den Ansprüchen 9 bzw. 10 zur Anwendung kommen. Sie machen sich den Umstand zunutze, daß in der ersten Phase des Fahrbetriebes nach Fahrtbeginn die Reifentemperatur durch die Walkarbeit im allgemeinen ansteigt. Bei einem Reserverad ist das nicht der Fall, weil sein Reifen nicht gewalkt wird. Sieht man in dem Reifendrucküberwachungssystem an jedem Rad zusätzlich zum Druckmeßfühler auch einen Temperaturmeßfühler vor und überträgt mit dem vom Sender am Rad ausgesandten Signal nicht nur eine Information über den Reifendruck, sondern auch über die Reifentemperatur, dann kann ein nach Fahrtbeginn signalisierter Temperaturanstieg als Anzeichen dafür gewertet werden, daß das Signal von einem sich drehenden Rad, nicht aber von einem Reserverad stammt.

## Patentansprüche

1. Verfahren zur Zuordnung von Sendern und Empfangsantennen bei Reifendrucküberwachungssystemen an Fahrzeugen, die aus je einem Druckmeßfühler, einem Sender und einer Sendeantenne am Rad, aus einer diesen jeweils zugeordneten Empfangsantenne an der Karosserie und aus einer daran, über Kabel angeschlossenen, Empfangs- und Auswerteelektronik bestehen, durch Zuordnen einer das Rad kennzeichnenden Kennung zu seinem Sender, Aussenden von die Kennung enthaltenden Signalen und Weiterleiten der Signale an die zentrale Empfangs- und Auswerteelektronik, Registrieren der Intensitäten der von den jeweiligen Empfangsantennen empfangenen, von den verschiedenen Sendern stammenden, Signale unter ihrer Kennung und Zuordnen der Kennung des an einer ausgewählten Antenne mit der größten Intensität empfangenen Signals zu dieser Antenne,
**dadurch gekennzeichnet**, daß auch während der Fahrt die Intensitäten der von ein und derselben Empfangsantenne empfangenen Signale unterschiedlicher Kennung selbsttätig verglichen und bei dem Intensitätsvergleich von jeder Kennung mehrere aufeinanderfolgend empfangene Signale durch Mittelwertbildung oder Zählung berücksichtigt werden,
und daß die Senderkennung, welche in jenem Signal enthalten ist, das von einer bestimmten Empfangsantenne mit der größten Intensität empfangen wird, ausgewählt und dieser Empfangsantenne zugeordnet wird.

2. Verfahren zur Zuordnung von Sendern und Empfangsantennen bei Reifendrucküberwachungssystemen an Fahrzeugen, die aus je einem Druckmeßfühler, einem Sender und einer Sendeantenne am Rad, aus einer diesen jeweils zugeordneten Empfangsantenne an der Karosserie und aus einer daran, über Kabel angeschlossenen, Empfangs- und Auswerteelektronik bestehen, durch Zuordnen einer das Rad kennzeichnenden Kennung zu seinem Sender, Aussenden von die Kennung enthaltenden Signalen und Weiterleiten der Signale an die zentrale Empfangs- und Auswerteelektronik, Registrieren der Intensitäten der von den jeweiligen Empfangsantennen empfangenen, von den verschiedenen Sendern stammenden, Signale unter ihrer Kennung und Auswählen der das Signal mit der ausgewählten Kennung mit der größten Intensität empfangenden Empfangsantenne und deren Zuordnung zu der Kennung des betreffenden Senders,
**dadurch gekennzeichnet**, daß auch während der Fahrt die Intensitäten, mit welcher die von einem Sender stammenden Signale von den verschiedenen Empfangsantennen empfangen und selbsttätig verglichen werden und daß bei dem Intensitätsvergleich von jeder Kennung mehrere aufeinanderfolgend empfangene Signale durch Mittelwertbildung oder Zählung berücksichtigt werden.

3. Verfahren nach Anspruch 1 oder 2, **dadurch gekennzeichnet**, daß diejenigen Ereignisse, bei denen Signale mit bestimmter Kennung von einer bestimmten Empfangsantenne mit maximaler Intensität empfangen wurden, unter einer Adresse gezählt werden, welche die Kennung des Senders der betreffenden Antenne zuordnet.

4. Verfahren nach einem der vorstehenden Ansprüche, **dadurch gekennzeichnet**, daß in der Auswerteelektronik eine Matrix bestehend aus Senderkennungen und Empfangsantennen gebildet wird, in der der Wert einer einzelnen Matrixzelle dann erhöht wird, wenn für die betreffende Kombination aus Senderkennung und Empfangsantenne die größte Intensität registriert wird.

5. Verfahren nach einem der vorstehenden Ansprüche, **dadurch gekennzeichnet**, daß das Signal mit der zweitgrößten Intensität ermittelt wird, die Differenz zwischen größter und zweitgrößter Intensität gebildet und mit einem Grenzwert verglichen wird und bei Überschreiten des Grenzwertes der Wert der Matrixzelle "Senderkennung / Empfangsantenne" für die größte Intensität erhöht wird, bei Unterschreiten des Grenzwertes der Meßwert jedoch verworfen wird.

6. Verfahren nach Anspruch 3, 4 oder 5, **dadurch gekennzeichnet**, daß der Wert, um den die Anzahl der Ereignisse einer bestimmten Zuordnung bei Auftreten eines weiteren Ereignisses erhöht bzw. der Inhalt einer Matrixzelle erhöht wird, mit der Größe der Intensitätsdifferenz zwischen den beiden jeweils größten Intensitäten gewichtet wird.

7. Verfahren nach einem der vorhergehenden Ansprüche, **dadurch gekennzeichnet,** daß nach Zuordnung eines Senders zu einer Empfangsantenne diese zum weiteren Zuordnungsverfahren mittels Intensitätsvergleich nicht mehr hinzugezogen wird.

8. Verfahren nach Anspruch 3-7, **dadurch gekennzeichnet**, daß die Werte in den Matrixzellen in bestimmten Zeitintervallen für Sender bei zugeordneten Empfangsantennen auf einen festen Wert Ds gesetzt werden und für Sender bei nicht zugeordneten Empfangsantennen auf 0 gesetzt werden, wobei Ds eine Zeit definiert, nach der die Zuordnung überprüft wird.

9. Verfahren nach einem der Ansprüche 1 und 3 bis 8, **dadurch gekennzeichnet**, daß die Signale, die von einer Empfangsantenne empfangen werden, welche einem der laufenden Räder zugeordnet ist, auf Schwankungen des Signalpegels untersucht werden,
und daß dieser Empfangsantenne jene Senderkennung zugeordnet wird, welche zu dem Signal gehört, welches beim Fahren unter den mit schwankenden Signalpegeln von dieser Empfangsantenne empfangenen Signalen die größte Intensität hat, wohingegen Signale, deren Signalpegel nicht infolge des Fahrens schwankt, mit ihrer Kennung einem oder mehreren mitgeführten Reserverädern zugeordnet werden oder bei der Zuordnung unberücksichtigt bleiben.

10. Verfahren nach einem der Ansprüche 2 bis 8, **dadurch gekennzeichnet**, daß die Signale, die von einem jeden der Sender stammen, auf Schwankungen des Signalpegels untersucht werden und daß die Sender, deren Signale infolge des Fahrens mit schwankenden Signalpegeln empfangen werden, laufenden Rädern zugeordnet werden, wohingegen etwaige Sender, deren Signale mit einem Signalpegel empfangen werden, welcher nicht infolge des Fahrens schwankt, einem oder mehreren mitgeführten Reserverädern zugeordnet werden oder unberücksichtigt bleiben.

11. Verfahren nach einem der Ansprüche 1 und 3 bis 9, **dadurch gekennzeichnet**, daß das Reifendrucküberwachungssystem zusätzlich an jedem Rad einen Temperaturfühler enthält und der am Rad vorgesehene Sender Signale aussendet, die nicht nur Information über den gemessenen Druck, sondern auch Information über die gemessene Temperatur enthalten,
daß die Signale, die von einer Empfangsantenne empfangen werden, welche einem der laufenden Räder zugeordnet ist, auf einen in der ersten Phase des Fahrbetriebs auftretenden Temperaturanstieg untersucht werden,
und daß dieser Empfangsantenne jene Senderkennung zugeordnet wird, welche zu dem Signal gehört, welches unter den Signalen, die im Fahrbetrieb einen Anstieg der Temperatur anzeigen, von dieser Empfangsantenne mit der größten Intensität empfangen wird, wohingegen Signale, die keinen Temperaturanstieg als Folge des Fahrbetriebes anzeigen, mit ihrer Kennung einem oder mehreren mitgeführten Reserverädern zugeordnet werden oder bei der Zuordnung unberücksichtigt bleiben.

12. Verfahren nach einem der Ansprüche 2 bis 8 und 10, **dadurch gekennzeichnet**, daß das Reifendrucküberwachungssystem zusätzlich an jedem Rad einen Temperaturfühler enthält und der am Rad vorgesehene Sender Signale aussendet, die nicht nur Information über den gemessenen Druck, sondern auch Information über die gemessene Temperatur enthalten,
daß die Signale, die von einem jeden der Sender stammen, auf einen Temperaturanstieg untersucht werden und daß die Sender, deren Signale infolge des Fahrens einen Temperaturanstieg zeigen, laufenden Rädern zugeordnet werden, wohingegen etwaige Sender, deren Signale keinen Temperaturanstieg infolge des Fahrens anzeigen, einem oder mehreren mitgeführten Reserverädern zugeordnet werden oder unberücksichtigt bleiben.

## Claims

1. A method for allocating transmitters and receiving antennas in tire pressure monitoring systems on vehicles, which systems consist of a pressure sensor, a transmitter, and a transmitting antenna at each wheel, of a receiving antenna respectively allocated to them on the body, and of an electronic receiving and analysis system connected thereto via cables, by allocating an identifier characterizing the wheel to its transmitter, by emitting signals containing the identifier, and by forwarding the signals to the central electronic receiving and analysis system, recording the intensities of the signals received by the respective receiving antennas and deriving from various transmitters, under the signals' identifiers, and allocating the identifier of the signal having the greatest intensity at an antenna to that antenna,
**characterized in that** the intensities of the signals of different identifiers received by one and the same receiving antenna are automatically compared, even with the vehicle in motion, and that multiple successively received signals of each identifier are taken into account in the intensity comparison by forming the average or by counting;
and that the transmitter identifier contained in the signal having the greatest intensity at a receiving antenna is selected and allocated to that receiving antenna.

2. A method for allocating transmitters and receiving antennas in tire pressure monitoring systems on vehicles, which systems consist of a pressure sensor, a transmitter, and a transmitting antenna at each wheel, of a receiving antenna respectively allocated to them on the body, and of an electronic receiving and analysis system connected thereto via cables. by allocating an identifier characterizing the wheel to its transmitter, by emitting signals containing the identifier, and by forwarding the signals to the central electronic receiving and analysis system, recording the intensities of the signals received by the respective receiving antennas and deriving from the various transmitters, under the signals' identifiers, and selecting the receiving antenna that receives the signal with the selected identifier with the greatest intensity, and allocating it to the identifier of the respective transmitter,
**characterized in that** the intensities with which of the signals deriving from a transmitter are received at the different receiving antennas are automatically compared, even with the vehicle in motion, and that multiple:successively received signals of each identifier are taken into account in the intensity comparison by forming the average or by counting.

3. The method as defined in Claim 1 or 2, **characterized in that** those events in which signals with a specific identifier were received by a specific receiving antenna at maximum intensity are counted under an address which allocates the transmitter's identifier to the relevant antenna.

4. The method as defined in one of the foregoing claims, **characterized in that** there is constituted in the electronic analysis system a matrix, consisting of transmitter identifiers and receiving antennas, in which the value of an individual matrix cell is incremented when the greatest intensity is recorded for the relevant combination of transmitter identifier and receiving antenna.

5. The method as defined in one of the foregoing claims, **characterized in that** the signal with the second-greatest intensity is determined. and the difference between the greatest and second-greatest intensity is taken and compared with a limit value; and if the limit value is exceeded, the value of the transmitter identifier/receiving antenna matrix cell for the greatest intensity is incremented, but the reading is discarded if the value does not exceed the limit value.

6. The method as defined in Claim 3, 4, or 5, **characterized in that** the value by which the number of events of a specific allocation is incremented when a further event occurs, or by which the content of a matrix cell is incremented, is weighted in terms of the intensity difference between the two respective greatest intensities.

7. The method as defined in one of the foregoing claims, **characterized in that** after allocation of a transmitter to a receiving antenna, the latter is no longer utilized for the further allocation process by means of an intensity comparison.

8. The method as defined in Claims 3 through 7, **characterized in that** the values in the matrix cells are set, at specific time intervals, to a fixed value Ds for transmitters with allocated receiving antennas, and to zero for transmitters without allocated receiving antennas, Ds defining a time after which the allocation is checked.

9. The method as defined in one of Claims 1 and 3 through 8, **characterized in that** the signals that are received by a receiving antenna which is allocated to one of the running wheels are examined for fluctuations in the signal level;
and that said receiving antenna is allocated to that transmitter identifier which belongs to the signal which, with the vehicle in motion, has the greatest intensity among the signals received by that receiving antenna with fluctuating signal levels, whereas signals whose signal level does not fluctuate due to vehicle motion are allocated with their identifier to one or more onboard spare wheels or are left out of consideration in the allocation.

10. The method as defined in one of Claims 2 through 8, **characterized in that** the signals that derive from each one of the transmitters are examined for fluctuations in the signal level; and the transmitters whose signals are received with fluctuating signal levels as a result of vehicle motion are allocated to running wheels, whereas any transmitters whose signals are received with a signal level which does not fluctuate as a result of vehicle motion are allocated to one or more onboard spare wheels, or are left out of consideration.

11. The method as defined in one of Claims 1 and 3 through 9, **characterized in that** the tire pressure monitoring system additionally contains a temperature sensor at each wheel, and the transmitter provided at the wheel emits signals which contain not only information about the measured pressure, but also information about the measured temperature;
that the signals that are received by a receiving antenna which is allocated to one of the running wheels are examined for a temperature rise occurring in the first phase of vehicle operation; and
that the transmitter identifier allocated to said receiving antenna is that which belongs to the signal which, among the signals which display a rise in temperature during vehicle operation, is received by the that receiving antenna at the greatest intensity, whereas signals which do not display a temperature rise as a result of vehicle operation are allocated with their identifier to one or more onboard spare wheels, or are left out of consideration during allocation.

12. The method as defined in one of Claims 2 through 8 and 10, **characterized in that** the tire pressure monitoring system additionally contains a temperature sensor at each wheel and the transmitter provided at the wheel emits signals which contain not only information about the measured pressure, but also information about the measured temperature;
that the signals that derive from each one of the transmitters are examined for a temperature rise; and
that the transmitters whose signals show a temperature rise as a result of vehicle motion are allocated to running wheels, whereas any transmitters whose signals do not display a temperature rise as a result of vehicle motion are allocated to one or more onboard spare wheels or are left out of consideration.

## Revendications

1. Procédé pour l'attribution d'émetteurs et d'antennes de réception dans des systèmes de surveillance de la pression des pneumatiques sur des véhicules automobiles, qui sont constitués respectivement par un capteur de pression, par un émetteur et par une antenne d'émission sur la roue, par une antenne de réception qui lui est respectivement attribuée, sur la carrosserie, et par une électronique de réception et d'évaluation raccordée à la carrosserie via des câbles, en attribuant une identification caractérisant la roue à un émetteur, en émettant des signaux contenant la caractérisation et en transmettant les signaux à l'électronique centrale de réception et d'évaluation, en enregistrant les intensités des signaux provenant des différents émetteurs et reçus par les antennes de réception respectives, avec leur identification, et en attribuant l'identification du signal reçu à une antenne sélectionnée avec l'intensité la plus grande, à cette même antenne,
caractérisé en ce que, également au cours de la conduite, les intensités des signaux d'identification différente reçus par une seule et même antenne de réception, sont soumises à une comparaison automatique et, au cours de la comparaison des intensités de chaque identification, plusieurs signaux reçus de manière successive sont pris en compte en calculant une valeur moyenne ou par comptage,
et en ce que l'identification d'émetteur qui est contenue dans chaque signal qui est reçu par une antenne de réception déterminée avec l'intensité la plus grande, est sélectionnée et est attribuée à cette antenne de réception.

2. Procédé pour l'attribution d'émetteurs et d'antennes de réception dans des systèmes de surveillance de la pression des pneumatiques sur des véhicules automobiles, qui sont respectivement constitués par un capteur de pression, par un émetteur et par une antenne d'émission sur la roue, par une antenne de réception qui lui est respectivement attribuée, sur la carrosserie, et par une électronique de réception et d'évaluation raccordée à la carrosserie via des câbles, en attribuant une identification caractérisant la roue à un émetteur, en émettant des signaux contenant l'identification et en transmettant les signaux à l'électronique centrale de réception et d'évaluation, en enregistrant les intensités des signaux avec leur identification provenant des différents émetteurs et reçus par les antennes de réception respectives avec l'intensité la plus grande et en sélectionnant l'antenne de réception recevant le signal avec l'identification sélectionnée et en attribuant cette dernière à l'identification d'émetteur correspondant,
caractérisé en ce que, également lors de la conduite, les intensités avec lesquelles les signaux provenant d'un émetteur sont reçus par les différentes antennes de réception sont soumises à une comparaison automatique et en ce que, lors de la comparaison des intensités de chaque identification, plusieurs signaux reçus de manière successive sont pris en compte en calculant une moyenne ou par comptage.

3. Procédé selon la revendication 1 ou 2, caractérisé en ce que des événements dans lesquels des signaux avec une identification déterminée ont été reçus avec l'intensité la plus grande par une antenne de réception déterminée sont comptés dans une adresse qui attribue l'identification d'émetteur à l'antenne correspondante.

4. Procédé selon l'une quelconque des revendications précédentes, caractérisé en ce qu'on forme dans l'électronique d'évaluation une matrice constituée par des identifications d'émetteurs et par des antennes de réception, dans laquelle on augmente la valeur d'une cellule de matrice individuelle lorsqu'on enregistre l'intensité la plus grande pour la combinaison correspondante de l'identification d'émetteur et de l'antenne de réception.

5. Procédé selon l'une quelconque des revendications précédentes, caractérisé en ce que le signal possédant la deuxième intensité quant à sa grandeur, on calcule la différence entre l'intensité la plus grande et l'intensité la plus grande moins une et on la compare à une valeur limite et en cas de dépassement de la valeur limite vers le haut, on augmente la valeur de la cellule matricielle "d'identification d'émetteur/antenne de réception" pour obtenir l'intensité la plus grande; en cas de dépassement de la valeur limite vers le bas, on rejette la valeur de mesure.

6. Procédé selon la revendication 3, 4 ou 5, caractérisé en ce que l'on pondère la valeur avec laquelle on augmente le nombre des événements d'une attribution déterminée lors de l'apparition d'un phénomène supplémentaire, respectivement avec laquelle on augmente le contenu d'une cellule matricielle, avec la valeur de la différence d'intensité entre les deux intensités respectives les plus grandes.

7. Procédé selon l'une quelconque des revendications précédentes, caractérisé en ce que après l'attribution d'un émetteur à une antenne de réception, on ne fait plus appel à cette dernière pour le processus d'attribution ultérieur à l'aide d'une comparaison des intensités.

8. Procédé selon l'une quelconque des revendications 3 à 7, caractérisé en ce qu'on règle les valeurs dans les cellules matricielles à des intervalles de temps déterminés pour des émetteurs auxquels ont été attribuées des antennes de réception à une valeur fixe Ds et on les règle à la valeur 0 pour des émetteurs auxquels n'ont pas été attribuées des antennes de réception, Ds définissant un laps de temps après lequel on vérifie l'attribution.

9. Procédé selon l'une quelconque des revendications 1 et 3 à 8, caractérisé en ce que les signaux qui sont reçus par une antenne de réception qui a été attribuée à une des roues qui tournent, sont analysés pour détecter des fluctuations du niveau de signal, et en ce que on attribue à cette antenne de réception l'identification d'émetteur qui appartient au signal qui possède, lors de la conduite, l'intensité la plus grande parmi les signaux reçus par cette antenne de réception avec des niveaux de signaux qui fluctuent, tandis que des signaux dont le niveau de signal n'est pas soumis à des fluctuations suite à la conduite sont attribués avec leur identification à une ou plusieurs roues de rechange transportées ou ne sont pas pris en compte lors de l'attribution.

10. Procédé selon l'une quelconque des revendications 2 à 8, caractérisé en ce que les signaux qui proviennent des émetteurs respectifs, sont analysés pour détecter des fluctuations du niveau de signal et en ce que les émetteurs, dont les signaux, sont reçus avec des niveaux de signaux fluctuants suite à la conduite, sont attribués à des roues qui tournent, tandis que n'importe quel émetteur dont les signaux sont reçus avec un niveau de signal qui ne fluctue pas suite à la conduite est attribué à une ou plusieurs roues de rechange transportées ou n'est pas pris en compte.

11. Procédé selon l'une quelconque des revendications 1 et 3 à 9, caractérisé en ce que le système de surveillance de la pression des pneumatiques contient en outre sur chaque roue un capteur de température et l'émetteur prévu sur la roue émet des signaux qui contiennent, non seulement des informations concernant la pression mesurée, mais encore des informations concernant la température mesurée, en ce que les signaux qui sont reçus par une antenne de réception qui est attribuée à une des roues qui tournent sont analysés pour détecter une élévation de la température se produisant dans la première phase de déplacement du véhicule, et en ce qu'on attribue à cette antenne de réception une identification d'émetteur qui appartient au signal qui, parmi les signaux qui indiquent, lors du déplacement de véhicule, une élévation de la température, est reçu par cette antenne de réception avec l'intensité la plus grande tandis que des signaux qui n'indiquent aucune élévation de la température suite au déplacement du véhicule sont attribués, avec leur identification, à une ou plusieurs roues de rechange transportées ou ne sont pas pris en compte lors de l'attribution.

12. Procédé selon l'une quelconque des revendications 2 à 8 et 10, caractérisé en ce que le système de surveillance de la pression des pneumatiques contient en outre un capteur de température sur chaque roue et l'émetteur prévu sur la roue émet des signaux qui contiennent, non seulement des informations concernant la pression mesurée, mais encore des informations concernant la température mesurée, en ce que les signaux qui proviennent des émetteurs respectifs, sont analysés pour détecter une élévation de la température et en ce que les émetteurs dont les signaux indiquent une élévation de la température suite au déplacement du véhicule sont attribués à des roues qui tournent tandis que n'importe quel émetteur dont les signaux n'indiquent aucune élévation de la température suite au déplacement du véhicule sont attribués à une ou plusieurs roues de rechange transportées ou ne sont pas pris en compte.
